(19) Europäisches Patentamt
European Patent Office
Office européen des brevets

(11) Veröffentlichungsnummer: **0 033 081**
**B1**

(12) # EUROPÄISCHE PATENTSCHRIFT

(45) Veröffentlichungstag der Patentschrift: **24.04.85**

(21) Anmeldenummer: **81100177.5**

(22) Anmeldetag: **13.01.81**

(51) Int. Cl.$^4$: **C 08 F 220/06,** G 03 C 1/00, G 03 C 7/00, G 03 C 5/54, C 08 L 33/02

(54) **Mehrwertige Metallkationen enthaltende anionische Mischpolymerisate und ihre Verwendung in fotografischen Materialien.**

(30) Priorität: **23.01.80 DE 3002287**

(43) Veröffentlichungstag der Anmeldung: **05.08.81 Patentblatt 81/31**

(45) Bekanntmachung des Hinweises auf die Patenterteilung: **24.04.85 Patentblatt 85/17**

(84) Benannte Vertragsstaaten: **BE DE FR GB**

(56) Entgegenhaltungen: **DE-A-2 734 298**

(73) Patentinhaber: **AGFA-GEVAERT Aktiengesellschaft D-5090 Leverkusen 1 (DE)**

(72) Erfinder: **Helling, Günter, Dr. In der Hildscheid 16 D-5068 Odenthal-Glöbusch (DE)**

EP 0 033 081 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft mehrwertige Metallkationen enthaltende anionische Mischpolymerisate die als wäßrige Dispersionen (Latex) gegen Koagulation und Sedimentation stabil sind. Weiterhin betrifft die Erfindung die Verwendung der genannten Mischpolymerisate in fotografischen Aufzeichnungsmaterialien, insbesondere in Bildempfangsschichten für das Farbdiffusionsübertragungsverfahren.

Anionische Polymerdispersionen (Latices) sind in großer Anzahl bekannt. Der überwiegende Teil solcher Dispersionen enthält nur einen geringen Anteil an fest eingebauten negativen Ladungen, die zur Stabilisierung der Dispersionen erforderlich sind. Zur Wahrung des Elektroneutralitätsprinzips sind die eingebauten negativen Ladungen üblicherweise durch einwertige Kationen wie Alkalimetallkationen kompensiert. Ein Austausch der einwertigen Kationen durch mehrwertige Kationen führt in der Regel zur Koagulation und damit zum Zusammenbrechen der Latices. Versuche zur Herstellung von Polymerisatdispersionen die gegen Einflüsse von mehrwertigen Metallkationen stabil sind, sind bekannt. So werden etwa in DE—OS 2 841 875 Polymerisatlatices beschrieben, die durch Copolymerisation von Glycidylacrylaten und Acrylamiden mit Acrylaten bei gleichzeitiger Verwendung hoher Mengen an anionischen Netzmitteln hergestellt wurden. Die beschriebenen Latices weisen zwar eine verbesserte Verträglichkeit gegenüber mehrwertigen Metallkationen auf als reine Polyacrylatlatices, sie sind aber bei Netzmittelgehalten von weniger als 1,5% nicht stabil gegen hohe Mengen an Metallsalzen. Außerdem sind die beschriebenen Latices wegen der fehlenden anionischen Gruppen nicht in der Lage, große Mengen an Metallkationen zu binden. Dies äußert sich darin, daß Mischungen von Metallsalzen mit den Polymerisatlatices durch Wasch- oder Dialyse-prozesse rasch wieder entmischt werden.

In Bildempfangsschichten für das fotografische Farbdiffusionsübertragungsverfahren ist die Verwendung von mehrwertigen, insbesondere komplexbildenden Metallkationen von besonderem Interesse. Bekanntlich wird bei dem besonders für die Colorsofortbildfotografie wichtigen Farbdiffusionsübertragungsverfahren ein lichtempfindliches Aufzeichnungsmaterial mit mehreren Silberhalogenidemulsionsschichten unterschiedlicher Spektralempfindlichkeit und diesen zugeordneten farbgebenden Verbindungen verwendet. Als farbgebende Verbindungen kommen beispielsweise sogenannte Entwicklerfarbstoffe in Frage, wobei es sich um originär diffusionsfähige Verbindungen mit einem chromophoren Rest handelt und einer Entwicklerfunktion, durch die die Verbindungen bei der Entwicklung bildmäßig immobilisiert werden, oder auch nichtdiffundierende farbgebende Verbindungen mit einem chromophoren Rest, der bei Entwicklung bildmäßig als diffundierender Farbstoff oder Farbstoffvorläufer in Freiheit gesetzt wird. Sofern der chromophore Rest der Entwicklerfarbstoffe oder der nichtdiffundierenden farbgebenden Verbindungen besondere Substituenten enthält, die als Liganden zur Komplexbildung mit mehrwertigen Metallkationen geeignet sind, besteht die Möglichkeit die Komplexbildung zur Verbesserung der Lichtstabilität, zur Beeinflussung des Farbtones sowie zur Fixierung der in die Bildempfangsschicht übertragenen Bildfarbstoffe auszunutzen. Zweckmäßigerweise wird die Komplexierung erst nach erfolgtem Farbübertrag durchgeführt, wozu entweder das Bildempfangsmaterial mit einer Lösung der komplexbildenden mehrwertigen Metallkationen, z.B. in Form einer Lösung der entsprechenden Salze, behandelt wird oder dadurch, daß die mehrwertigen Metallkationen in eine oder mehrere Schichten des Bildempfangsmaterials eingelagert werden, so daß sie sofort während des Entwicklungsvorganges mit den eindiffundierenden Farbstoffen unter Komplexbildung reagieren können.

In Research Disclosure Nr. 18534 (September 1979) sind Polymere mit einem Gehalt an komplex gebundenen mehrwertigen Metallkationen und deren Verwendung in Bildempfangsschichten von farbfotografischen Materialien für das Farbdiffusionsübertragungsverfahren beschrieben. Die Aufnahmekapazität der dort erwähnten Polymerisate für mehrwertige Metallkationen ist jedoch begrenzt und es wäre wünschenswert, durch Verwendung von Polymeren erhöhter Aufnahmekapazität für mehrwertige Metallkationen die Voraussetzung für eine Verringerung der erforderlichen Mindestschichtdicke zu schaffen.

In DE—A—27 34 298 sind Copolymerisate beschrieben, die im wesentlichen drei verschiedene Monomerkomponenten enthalten. Diese Polymerisate können vernetzt sein und sie können auch mehrwertige Metallkationen enthalten. Bei den Polymerisaten handelt es sich aber nicht um Mischpolymerisatdispersionen; vielmehr werden die Polymerisate im allgemeinen durch Fällungspolymerisation hergestellt, weil hierbei das Produkt gewöhnlich als sehr feine krümelige und häufig flockige Fällung anfällt, die nach der Entfernung des Lösungsmittels vor dem Gebrauch selten gemahlen oder einer anderen Behandlung unterworfen werden muß. Solche Polymerisate weisen eine hohe Absorptionsfähigkeit für Wasser auf. Sie sind aber nicht befähigt stabile Dispersionen zu bilden. Auch können mit ihnen keine optisch klaren Schichten hergestellt werden.

Gegenstand der Erfindung ist eine Dispersion von Teilchen einer durchschnittlichen Teilchengröße von weniger als 1 µm eines vernetzten mehrwertige Metallionen enthaltenden anionischen Mischpolymerisates der folgenden Formel I

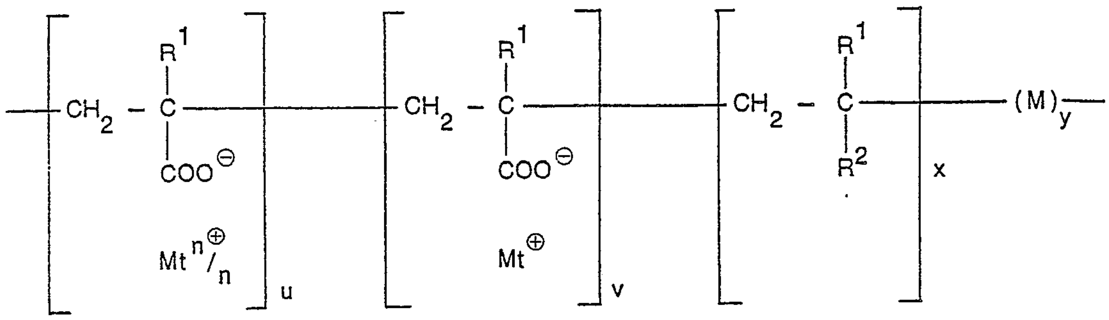 I

worin bedeuten

$R^1$ Wasserstoff, Methyl und/oder Carboxymethyl;

$R^2$ den vervollständigenden Rest einer organischen Vernetzerverbindung mit mindestens zwei copolymerisierbaren C-C-Doppelbindungen, deren eine

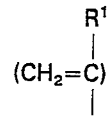

in die in der Formel dargestellte Polymerkette einpolymerisiert worden ist;

M polymerisierte Einheiten einer weiteren mit Acryl- oder Methacrylsäure oder mit deren Estern copolymerisierbaren monoethylenisch ungesättigten Verbindung;

$Mt^{n\oplus}$ ein n-wertiges Metallkation mit $n \geqq 2$;

$Mt^{\oplus}$ ein Alkalimetallkation oder ein Ammoniumkation;

u, v, x, y die molaren Anteile der in dem Mischpolymerisat enthaltenen polymerisierten Monomeren in Mol-% und zwar im einzelnen:

u 20—99 Mol-%, vorzugsweise 40—98 Mol-%;

x 0,5—10 Mol-%, vorzugsweise 1—5 Mol-%;

v+y 0—79,5 Mol-%, vorzugsweise 0—55 Mol-%.

Die in den mit den verschiedenen Indices u, v, x bezeichneten Monomeren der obigen Formel mehrfach vorkommenden Reste $R^1$ müssen nicht notwendigerweise dieselbe Bedeutung haben sondern können auch verschieden sein.

Bei dem in obiger Formel dargestellten Rest $R^2$ handelt es sich um den Rest einer monomeren Vernetzerverbindung. Hierunter werden erfindungsgemäß polyfunktionelle monomere Verbindungen verstanden, die mindestens zwei, gelegentlich auch drei oder mehr mit Acrylsäure, Methacrylsäure oder (Meth-)acrylsäureestern copolymerisierbare Doppelbindungen enthalten und die aufgrund der mehrfach vorhandenen copolymerisierbaren Doppelbindungen in verschiedene Mischpolymerisatketten eingebaut werden und hierdurch eine Vernetzung der Mischpolymerisate bewirken. Beispiele für geeignete Vernetzerverbindungen sind: Divinylcyclohexan, Trivinylcyclohexan, Tetraallyloxyethan, Divinylbenzol, 1,7-Octadien oder andere Vernetzer wie beschrieben in "Houben-Weyl, Methoden der Organischen Chemie, Makromolekulare Stoffe, Teil 1, Georg Thieme Verlag, Stuttgart, 1961, S. 32, 33.

Zu den copolymerisierbaren, ethylenisch ungesättigten Verbindungen, die mit Acrylsäure oder Methacrylsäure copolymerisiert werden können und in der allgemeinen Formel durch M dargestellt werden, gehören Verbindungen, die eine einzige additionspolymerisierbare ungesättigte Bindung, beispielsweise eine ethylenische Doppelbindung, aufweisen, wie Acrylate, Acrylamide, Methacrylate, Methacrylamide, Allylverbindungen, Vinylidenverbindungen, Vinylester, Vinylether, Crotonate, Styrole, (Meth-)acrylnitril. Beispiele für Acrylate sind Alkylacrylate wie Methylacrylat, Ethylacrylat, Propylacrylat, Butylacrylat, Amylacrylat, 2-Ethylhexylacrylat, Octylacrylat, tert.-Octylacrylat, Chlorethylacrylat, 2,2-Dimethylhydroxypropylacrylat, 5-Hydroxypentylacrylat, Trimethylolpropanmonoacrylat, Pentaerythritmonoacrylat, Glycidylacrylat, ferner Benzylacrylat, Methoxybenzylacrylat, Furfurylacrylat, Tetrahydrofurfurylacrylat und Arylacrylate wie Phenylacrylat. Beispiele für Methacrylate sind Alkylmethacrylate wie Methylmethacrylat, Ethylmethacrylat, Propylmethacrylat, Isopropylmethacrylat, Butylmethacrylat, Amylmethacrylat, Hexylmethacrylat, Octylmethacrylat, 4-Hydroxybutylmethacrylat, 5-Hydroxypentylmethacrylat, 2,2-Dimethyl-3-hydroxypropylmethacrylat, Trimethylolpropanmonomethacrylat, Pentaerythritmonomethacrylat, Glycidylmethacrylat, ferner Cyclohexylmethacrylat, Benzylmethacrylat, Chlorbenzylmethacrylat, Furfurylmethacrylat und Tetrahydrofurfurylmethacrylat, sowie Arylmethacrylate wie Phenylmethacrylat, Cresylmethacrylat und Naphthylmethacrylat. Beispiele für Acrylamide sind Acrylamid selbst oder N-Mono-alkyl- oder N,N-Dialkyl-acrylamide, in denen die Alkylgruppe(n) z.B. (eine) Methyl-, Ethyl-, Propyl-, Butyl-, t-Butyl-, Heptyl-, Octyl-, Cyclohexyl-, Benzyl- oder Pentylgruppe(n) ist (sind), z.B. Dimethylacrylamid, N,N-Dibutylacrylamid, Hydroxyethylacrylamid, N-Monoarylacrylamide, in denen die Arylgruppe z.B. eine Phenyl-, Tolyl- oder Naphthylgruppe ist und N-Hydroxyarylacrylamide wie Hydroxyphenylacrylamid und gemischte N-Alkyl-N-arylacrylamide, z.B. N-Methyl-N-phenylacrylamid. Beispiele für

Methacrylamide sind Methacrylamid selbst oder N-Monoalkyl- oder N,N-Dialkylmethacrylamide, deren Alkylgruppe(n) beispielsweise (eine) Methyl-, Ethyl-, t-Butyl-, 2-Ethylhexylgruppe(n) sind, z.B. Methylmethacrylamid, Hydroxyethylmethacrylamid, Dimethylmethacrylamid, Dibutylmethacrylamid sowie Cyclohexylmethacrylamid, N-Arylmethacrylamide, in denen die Arylgruppe beispielsweise eine Phenylgruppe ist, ferner N-Hydroxyethyl-N-methylmethacrylamid, N-Methyl-N-phenylmethacrylamid und N-Ethyl-N-phenylmethacrylamid. Beispiele für Allylverbindungen sind Allylester wie Allylacetat, Allylcaproat, Allylcaprylat, Allylacetoacetate, Allyllaurat, Allylpalmitat, Allylstearat, Allylbenzoat und Allyllactat sowie Allyloxyethanol. Beispiele für Vinylether sind Alkylvinylether, wie Hexylvinylether, Octylvinylether, Decylvinylether, 2-Ethylhexyl-vinylether, Methoxyethyl-vinylether, Ethoxyethylvinylether, Chlorethylvinylether, 1-Methyl-2,2-dimethylpropylvinylether, 2-Ethylbutyl-vinylether, Hydroxyethylvinylether, Vinylmethylether, Diethylenglycolvinylether, Dimethylaminoethyl-vinylether, Butylaminoethyl-vinylether, Diethylaminoethyl-vinylether, Benzylvinylether und Tetrahydrofurfurylvinylether; Vinylarylether wie Vinylphenylether, Vinyltolylether, Vinylchlorphenylether, Vinyl-2,4-dichlorphenylether, Vinylnaphthylether und Vinylanthranylether. Beispiele für Vinylester sind Vinylacetat, Vinylbutyrat, Vinylisobutyrat, Vinyltrimethylacetat, Vinylvalerat, Vinylcaproat, Vinylchloracetat, Vinyldichloracetat, Vinylmethoxyacetat, Vinylbutoxyacetat, Vinylphenylacetat, Vinylacetoacetat, Vinyllactat, Vinylpropionat, Vinyl-β-phenylbutyrat, Vinylbenzoat, Vinylsalicylat, Vinylchlorbenzoat, Vinyltetrachlorbenzoat und Vinylnaphthoat. Beispiele für Styrole sind Styrol selbst, ferner Alkylstyrole, z.B. p-Methyl-styrol, o-Methylstyrol, 2,4-Dimethylstyrol, Trimethylstyrol, p-Butylstyrol, p-Hexylstyrol, α-Methylstyrol, Decylstyrol, Chlormethylstyrol, Trifluormethylstyrol, Ethoxymethylstyrol und Acetoxymethylstyrol; Alkoxystyrole wie p-Methoxystyrol, 4-Methoxy-3-methylstryrol und Dimethoxystyrol; sowie Halogenstyrole, z.B. p-Chlorstyrol, Tetrachlorstyrol, Pentachlorstyrol, p-Bromstyrol, 2,4-Dibromstyrol, Fluorstyrol, Jodstyrol, Trifluorstyrol, 2-Brom-4-trifluormethylstyrol und 4-Fluor-3-trifluormethylstyrol.

Als mehrwertige Metallkationen kommen alle positiv geladenen Metallkationen oder Metallkomplexkationen in Frage soweit zwischen dem anionisch aufgebauten Polymergerüst und dem Metall(komplex)ion eine Ionen- oder Komplexbindung zustande kommt.

Die Polymerisatdispersionen enthalten im allgemeinen einen geringen Anteil an Alkalimetallkationen, die eine Erhöhung der Stabilität der Dispersionen bewirken. Der Anteil an Alkalimetallkationen, der erforderlich ist um die Stabilität der erfindungsgemäßen Mischpolymerisatdispersion zu gewährleisten, ist stark abhängig von der Art des mehrwertigen Metallkations.

Die erfindungsgemäßen Mischpolymerisatdispersionen können Netzmittel enthalten. Jedoch sind die erfindungsgemäßen Mischpolymerisatdispersionen im allgemeinen ohne weitere Zusätze stabil genug und unempfindlich gegen Zusätze von mit Wasser mischbaren Lösungsmitteln, so daß sich ein Zusatz von Netzmitteln in den meisten Fällen erübrigt.

Die erfindungsgemäßen Mischpolymerisatdispersionen weisen durchschnittliche Teilchengrößen von kleiner als 1 µm auf. Besonders stabil sind Dispersionen mit Teilchengrößen im Bereich von 0,05 bis 0,5 µm.

Beispiele für erfindungsgemäße mehrwertige Metallkationen enthaltende anionische Mischpolymerisate sind im folgenden angegeben.

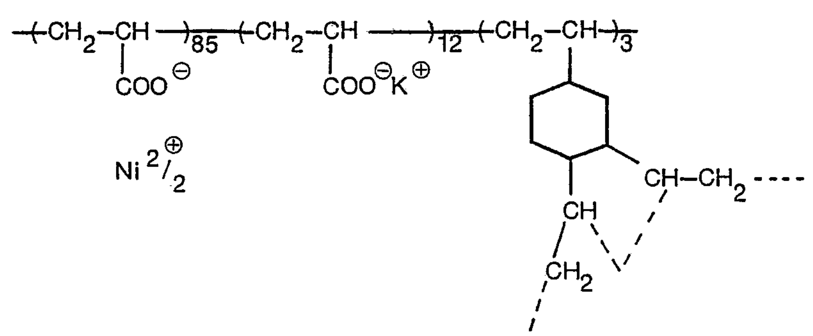

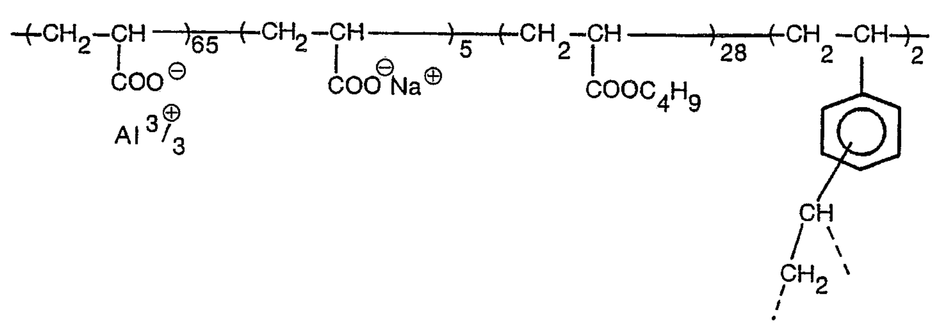

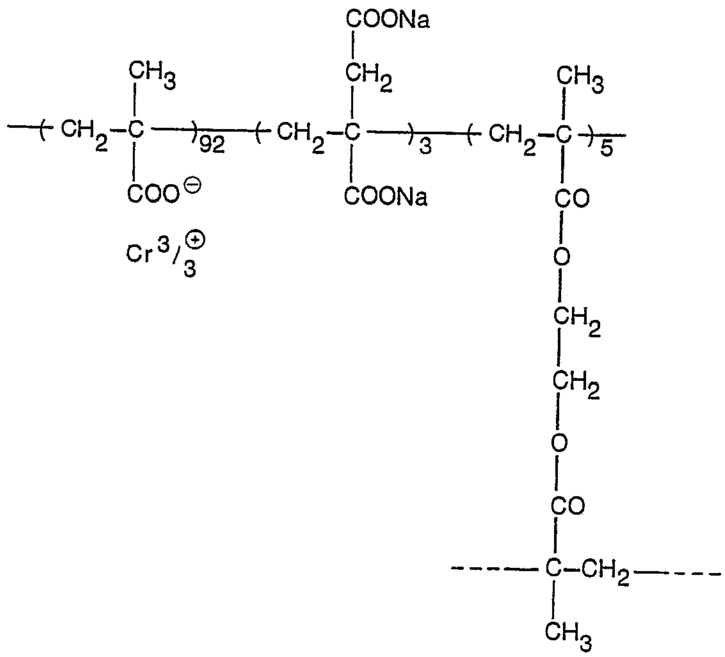

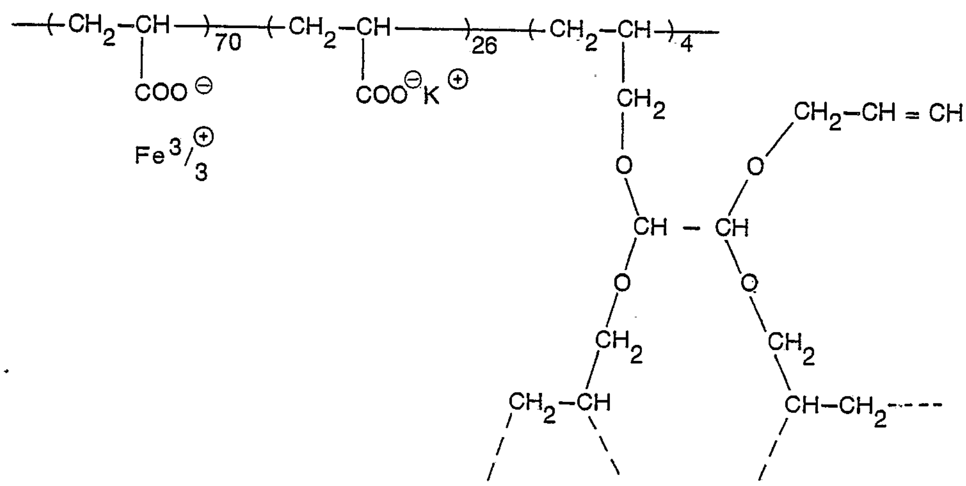

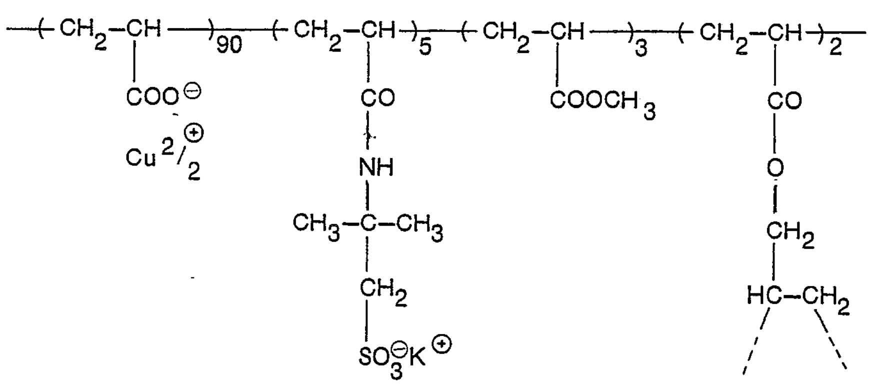

Die Herstellung der erfindungsgemäßen Mischpolymerisatdispersionen erfolgt zweckmäßigerweise ausgehend von den in DE—OS 2 652 464 beschriebenen Mischpolymerisatlatices. Die in der H-Form vorliegenden vernetzten Dispersionen werden mit Alkali neutralisiert und mit wäßrigen Lösungen der gewünschten Metallsalze versetzt. Dabei kommt es wie aus der Chemie der Ionenaustauscher bekannt zu Austauschreaktionen zwischen den Alkali- und Nicht-Alkaliionen. Nach Abtrennen der nicht an den Polymerlatex gebundenen Ionen durch ein übliches Verfahren wie Dialyse, Ultrafiltration oder Flocken, Waschen und Redispergieren der Dispersion erhält man die erfindungsgemäßen mehrwertige Metallkationen enthaltenden anionischen Mischpolymerisatdispersionen.

In einigen Fällen ist es auch möglich, die in der $H^{\oplus}$-Form vorliegenden Mischpolymerisatdispersionen entsprechend DE—OS 2 652 464 unmittelbar mit den entsprechenden Metallhydroxidlösungen zu versetzen, wobei sich unter Wasserabspaltung die erfindungsgemäßen mehrwertige Metallkationen enthaltenden anionischen Mischpolymerisatdispersionen bilden.

Eine weitere Möglichkeit zur Herstellung der erfindungsgemäßen Mischpolymerisatdispersionen besteht darin, daß man anstelle der freie Säuregruppen enthaltenden Mischpolymerisatdispersionen gemäß DE—OS 2 652 464 von entsprechenden Acrylatpolymeren ausgeht, die mit Alkali verseift und in Form der hierbei entstehenden Alkalimetallsalzdispersionen unmittelbar mit Schwermetallsalzen versetzt und die hierbei entstehenden überschüssigen Salze von der Dispersion abtrennt.

Die erfindungsgemäßen Mischpolymerisatdispersionen können in der verschiedenartigsten Weise verwendet werden, um mehrwertige Metallkationen diffusionsfest in Schichten einzulagern, ohne daß ihre Reaktivität gegenüber komplexbildenden Substanzen verloren geht. So können die erfindungsgemäßen Latices mit Bindemitteln wie beispielsweise Gelatine, Polyvinylalkohol, Cellulosederivaten, Polyacrylamiden vermischt werden und in Form dieser Mischung zur Herstellung transparenter Schichten verwendet werden. Bei definierten Schichtdicken lassen sich die so erhaltenen Folien zur qualitativen und quantitativen Bestimmung von Substanzen verwenden, die mit den gebundenen mehrwertigen Metallkationen Komplexe mit charakteristischen im UV- oder sichtbaren Spektralbereich liegenden Absorptionsbanden ausbilden.

Eine andere Verwendungsmöglichkeit der erfindungsgemäßen Mischpolymerisatdispersionen besteht darin, mehrwertige Metallkationen in diffusionsfester Form in die verschiedensten Schichten von fotografischen Materialien einzubringen. Hierbei kann es sich sowohl um lichtempfindliche Schichten, z.B. Silberhalogenidemulsionsschichten, oder auch um nicht lichtempfindliche Bindemittelschichten handeln. So sind beispielsweise Schichten bestehend aus erfindungsgemäßen Mischpolymerisatdispersionen mit Teilchengrößen kleiner als 0,4 µm und einem Bindemittel wie beispielsweise Gelatine, Polyvinylalkohol, Cellulosederivaten völlig transparent und optisch klar. Durch die in diesen Schichten enthaltenen Mischpolymerisate sind die mehrwertigen Metallkationen fest gebunden, so daß weder im trockenen noch im feuchten Zustand der Schicht eine Diffusion der in den Dispersionsteilchen befindlichen Metallionen stattfindet.

Die erfindungsgemäßen synthetischen mehrwertige Metallkationen enthaltenden Mischpolymerisatdispersionen können direkt mit fertigen fotografischen Gelatinesilberhalogenidemulsionen vermischt werden. Bei einer bevorzugten Verwendung der erfindungsgemäßen Mischpolymerisatdispersionen wird eine fotografische Silberhalogenidemulsion mit dem erfindungsgemäßen mehrwertige Metallkationen enthaltenden Mischpolymerisatdispersion versetzt und durch weiteren Zusatz von beispielsweise Sensibilisierungsfarbstoffen, Antischleierbildungsmitteln, Stabilisatoren, Empfindlichkeitsregulatoren, Beschichtungshilfsmitteln und Härtungsmitteln fertiggestellt. Naturgemäß sind die erfindungsgemäßen Mischpolymerisatdispersionen unempfindlich gegen die Anwesenheit von mehrwertigen Metallkationen, z.B. Ionen von Cadmium, Magnesium, Zink, Rhodium, Platin und Iridium, wie sie gelegentlich in Form von Salzen zur Verbesserung der fotografischen Eigenschaften von Silberhalogenidemulsionen verwendet werden. Typische Beispiele solcher Salze sind Cadmiumchlorid, Cadmiumnitrat, Magnesiumchlorid, Zinknitrat, Zinkchlorid und Rhodiumtrichlorid. Hierzu sei beispielsweise auf die DE—OS 2 841 875 verwiesen. Es liegt damit auf der Hand, die erfindungsgemäßen Mischpolymerisatdispersionen als partiellen Gelatineersatz in fotografischen Silberhalogenidemulsionen zu verwenden, die solche Salze von mehrwertigen Metallen enthalten, um die mechanischen Eigenschaften der Schichten zu verbessern.

Durch Einlagerung der erfindungsgemäßen mehrwertige Metallkationen enthaltenden anionischen Mischpolymerisate in nicht lichtempfindliche Bindemittelschichten können beispielsweise farbige Filterschichten hergestellt werden oder anfärbbare Schichten wie sie in Form von Bildempfangsschichten in fotografischen Materialien für das Farbdiffusionsübertragungsverfahren Anwendung finden. Im ersteren Fall kann die erfindungsgemäße Mischpolymerisatdispersion mit einem geeigneten komplexbildenden Farbstoff angefärbt und nach Vermischung mit einem Bindemittel wie Gelatine als Schicht vergossen werden.

Nach einer bei weitem bevorzugten Anwendung der erfindungsgemäßen mehrwertige Metallkationen enthaltenden anionischen Mischpolymerisatdispersionen werden Bildempfangsschichten für fotografische Materialien für das Farbdiffusionsübertragungsverfahren hergestellt, indem die Mischpolymerisatdispersionen zusammen mit einem geeigneten Bindemittel wie etwa Gelatine und gegebenenfalls einem kationische Gruppen enthaltenden Beizmittel für anionische Farbstoffe zu einer Bildempfangsschicht vergossen werden.

Derartige Bildempfangsschichten stellen ein wesentliches Schichtelement in fotografischen

Materialien für das Farbdiffusionsübertragungsverfahren dar. In der einfachsten Form besteht ein solches fotografisches Material aus einem Schichtträger und einer darauf angeordneten Bildempfangsschicht, die eine Polymerisatdispersionen gemäß Formel, gegebenenfalls zusammen mit einem kolloidalen Bindemittel, enthält. Zur Verbesserung der Haftung der Bildempfangsschicht auf dem Schichtträger kann letzterer mit einer üblichen Haftschicht versehen werden. Ein solches Material ist als Bildempfangsmaterial für jede Art von fotografischen Farbdiffusionsübertragungsverfahren geeignet, bei denen diffundierende Bildfarbstoffe oder auch diffundierende Farbbildner (Bildfarbstoffvorläufer) mit zur Chelatbildung befähigten Substituenten verwendet bzw. bildmäßig freigesetzt und auf eine Bildempfangsschicht übertragen werden können. Nach dem erfolgten Übertrag weist demnach ein solches fotografisches Material in der Bildempfangsschicht eine bildgemäße Verteilung eines oder mehrerer derartiger Farbstoffe auf.

Gemäß einer vorteilhaften Ausgestaltung der Erfindung kann das fotografische Material außer einer Bildempfangsschicht mit der erfindungsgemäßen mehrwertige Metallkationen enthaltenden Mischpolymerisatdispersion mindestens eine Schicht mit einem vorzugsweise sauren, zur Chelatbildung geeignete Substituenten enthaltenden Farbstoff oder einer entsprechenden Vorläuferverbindung auf sowie mindestens eine lichtempfindliche Schicht, insbesondere eine lichtempfindliche Silberhalogenidemulsionschicht. Die erwähnten chelatbildende Substituenten enthaltenden Farbstoffe bzw. Farbstoffvorläuferverbindungen werden nachfolgend zusammenfassend als farbgebende Verbindungen bezeichnet. In vorteilhafter Weise kann das fotografische Material mit der Bildempfangsschicht aus den erfindungsgemäßen mehrwertige Metallkationen enthaltenden Mischpolymerisatdispersionen auch mehrere lichtempfindliche Silberhalogenidemulsionsschichten unterschiedlicher Spektralempfindlichkeit enthalten sowie weitere nicht lichtempfindliche Schichten wie Zwischenschichten, Deckschichten und andere Schichten der verschiedensten Funktionen, wie sie bei mehrschichtigen farbfotografischen Aufzeichnungsmaterialien üblich sind.

Fotografische Materialien, die eine Bildempfangsschicht mit einer erfindungsgemäßen Mischpolymerisatdispersion aufweisen, d.h. Bildempfangsmaterialien und insbesondere farbfotografische Aufzeichnungsmaterialien, die als integralen Bestandteil ein solches Bildempfangsmaterial enthalten, können darüber hinaus noch saure Schichten und sogenannte Brems- oder Verzögerungsschichten enthalten, die zusammen ein sogenanntes, kombiniertes Neutralisationssystem bilden. Ein solches Neutralisationssystem kann in bekannter Weise zwischen dem Schichtträger und der darauf angeordneten Bildempfangsschicht angeordnet sein oder an einer anderen Stelle im Schichtverband, z.B. oberhalb der lichtempfindlichen Schichten, d.h. jenseits dieser lichtempfindlichen Schichten von der Bildempfangsschicht aus betrachtet. Das Neutralisationssystem ist normalerweise so orientiert, daß sich die Brems- oder Verzögerungsschicht zwischen der Säureschicht und der Stelle befindet, an der die alkalische Entwicklungsflüssigkeit oder -paste zur Einwirkung gebracht wird. Solche Säureschichten, Bremsschichten bzw. aus beiden bestehende Neutralisationsschichten sind beispielsweise bekannt aus US 2 584 030, US 2 983 606, US 3 362 819, US 3 362 821, DE—OS 2 455 762, DE—OS 2 601 653, DE—OS 2 716 505, DE—OS 2 601 653, DE—OS 2 716 505, DE—OS 2 816 878. Ein solches Neutralisationssystem kann in bekannter Weise auch zwei oder mehrere Bremsschichten enthalten.

Das fotografische Material kann in einer besonderen Ausgestaltung des weiteren eine oder mehrere für wäßrige Flüssigkeiten durchlässige pigmenthaltige opake Schichten enthalten. Diese können zwei Funktionen erfüllen. Einerseits kann hierdurch der unerwünschte Zutritt von Licht zu lichtempfindlichen Schichten unterbunden werden und andererseits kann eine solche Pigmentschicht insbesondere, wenn ein helles oder weißes Pigment, z.B. $TiO_2$, verwendet wurden, für das erzeugte Farbbild einen ästhetisch angenehmen Hintergrund bilden. Integrale farbfotografische Aufzeichnungsmaterialien mit einer solchen Pigmentschicht sind bekannt, z.B. aus US 2 543 181 und DE—AS 1 924 430. Anstelle einer vorgebildeten opaken Schicht können auch Mittel vorgesehen sein, um eine solche Schicht erst im Verlauf des Entwicklungsverfahrens zu erzeugen. Entsprechend den beiden erwähnten Funktionen können derartige Pigmentschichten aus zwei oder mehreren Teilschichten aufgebaut sein, von denen eine beispielsweise ein weißes Pigment und die andere beispielsweise ein dunkles, Licht absorbierendes Pigment, z.B. Ruß, enthält.

Bei einer besonders bevorzugten Ausgestaltung der Erfindung ist das fotografische Material ein integrales farbfotografisches Aufzeichnungsmaterial für die Durchführung des Farbdiffusionsübertragungsverfahrens und weist beispielsweise folgende Schichtelemente auf:

1) einen transparenten Schichtträger;
2) eine Bildempfangsschicht;
3) eine lichtundurchlässige Schicht (Pigmentschicht);
4) ein lichtempfindliches Element mit mindestens einer lichtempfindlichen Silberhalogenidemulsionsschicht und mindestens einer dieser zugeordneten farbgebenden Verbindung;
5) eine Bremsschicht,
6) eine saure Polymerschicht;
7) einem transparenten Schichträger.

Dieses Material kann dabei in der Weise zusammengesetzt werden, daß getrennt voneinander zwei verschiedene Teile hergestellt werden, nämlich der lichtempfindliche Teil (Schichtelemente 1 bis 4) und das Abdeckblatt (Schichtelemente 5 bis 7), die dann schichtseitig aufeinander gelegt und miteinander verbunden werden, gegebenenfalls unter Verwendung von Abstandsstreifen, so daß zwischen den beiden

Teilen ein Raum für die Aufnahme einer genau bemessenen Menge einer Entwicklungsflüssigkeit gebildet wird. Die Schichtelemente 5 und 6, die zusammen das Neutralisationssystem bilden, können auch, allerdings in vertauschter Reihenfolge, zwischen dem Schichtträger und der Bildempfangsschicht des lichtempfindlichen Teiles angeordnet sein.

Es können Mittel vorgesehen sein, um eine Entwicklungsflüssigkeit zwischen zwei benachbarte Schichten des integralen Aufzeichnungsmaterials einzuführen, z.B. in Form eines seitlich angeordneten, aufspaltbaren Behälters, der bei Einwirkung mechanischer Kräfte seinen Inhalt zwischen zwei benachbarte Schichten des Aufzeichnungsmaterials, im vorliegenden Fall zwischen den lichtempfindlichen Teil und das Abdeckblatt, ergießt.

Das lichtempfindliche Element kann im Falle eines integralen Aufzeichnungsmaterials wesentlicher Bestandteil des fotografischen Materials sein. Falls das fotografische Material selbst nicht lichtempfindlich ist, sondern im wesentlichen nur aus Schichtträger und Bildempfangsschicht besteht, wird es während des Entwicklungsverfahrens in Kontakt gebracht mit einem Bildempfangsmaterial, das in einer Bildempfangsschicht eine erfindungsgemäße mehrwertige Metallkationen enthaltende Mischpolymerisatdispersion enthält. Das lichtempfindliche Element enthält im Falle eines Einfarbstoffübertragungsverfahrens eine lichtempfindliche Silberhalogenidemulsionsschicht und dieser zugeordnet eine farbgebende Verbindung. Dabei kann sich die farbgebende Verbindung in einer zu der Silberhalogenidemulsionsschicht benachbarten Schicht oder in der Silberhalogenidemulsionsschicht selbst befinden, wobei im letzteren Fall die Farbe des Bildfarbstoffes bevorzugt so ausgewählt wird, daß der überwiegende Absorptionsbereich der farbgebenden Verbindung nicht übereinstimmt mit dem überwiegenden Empfindlichkeitsbereich der Silberhalogenidemulsionsschicht. Zur Herstellung mehrfarbiger Übertragsbilder in naturgetreuen Farben enthält das lichtempfindliche Element jedoch drei derartige Zuordnungen von farbgebender Verbindung und lichtempfindlicher Silberhalogenidemulsionsschicht, wobei in der Regel der Absorptionsbereich des aus der farbgebenden Verbindung resultierenden Bildfarbstoffes mit dem Bereich der spektralen Empfindlichkeit der zugeordneten Silberhalogenidemulsionsschicht im wesentlichen übereinstimmen wird. Günstig für die Erzielung einer möglichst hohen Empfindlichkeit ist es dann jedoch, wenn jeweils die farbgebende Verbindung in einer separaten Bindemittelschicht (gesehen in Richtung des bei der Belichtung einfallenden Lichtes) hinter der Silberhalogenidemulsionsschicht angeordnet ist oder eine Absorption aufweist, die von derjenigen des Bildfarbstoffes verschieden ist ("verschobene Bildfarbstoffe" — US 3 854 945). Eine Verschiebung der Absorption ergibt sich in der Regel durch die in der Bildempfangsschicht mit den erfindungsgemäßen mehrwertige Metallkationen enthaltenden Mischpolymerisatdispersionen ablaufende Komplexierung, wenn Farbstoffe mit zur Chelatbildung befähigten Substituenten verwendet werden. Farbgebende Verbindungen mit solchen Farbstoffresten sind beispielsweise beschrieben in US 3 081 167 und DE—OS 2 740 719.

Die bei der Entwicklung einer Silberhalogenidemulsion entstehenden Entwickleroxidationsprodukte dürfen sich selbstverständlich nur auf die zugeordnete farbgebende Verbindung auswirken. Es sind deshalb im allgemeinen in dem lichtempfindlichen Element Trennschichten vorhanden, die die Diffusion der Entwickleroxidationsprodukte in andere, nicht zugeordnete Schichten wirksam unterbinden. Diese Trennschichten können z.B. geeignete Substanzen enthalten, die mit den Entwickleroxidationsprodukten reagieren, beispielsweise nicht diffundierende Hydrochinonderivate oder, falls es sich bei der Entwicklerverbindung um eine Farbentwicklerverbindung handelt, nicht diffundierende Farbkuppler.

Bei den farbgebenden Verbindungen kann es sich um farbige Verbindungen handeln, die selbst diffusionsfähig sind und die bei der Behandlung der Schichten mit einer alkalischen Arbeitsflüssigkeit anfangen, zu diffundieren und lediglich an den belichteten Stellen durch die Entwicklung festgelegt werden. Die farbgebenden Verbindungen können aber auch diffusionsfest sein und im Verlauf der Entwicklung einen diffundierenden Farbstoff in Freiheit setzen.

Farbgebende Verbindungen, die a priori diffusionsfähig sind, sind beispielsweise bekannt aus den deutschen Patentschriften 1 036 640, 1 111 936 und 1 196 075. Die dort beschriebenen sogenannten Farbstoffentwickler enthalten im gleichen Molekül einen Farbstoffrest und eine Gruppierung, die in der Lage ist, belichtetes Silberhalogenid zu entwickeln.

Unter den bisher bekannt gewordenen Verfahren zur Herstellung farbfotografischer Bilder nach dem Farbdiffusionsübertragungsverfahren gewinnen in jüngster Zeit zunehmend solche an Bedeutung, die auf der Verwendung diffusionsfest eingelagerter, farbgebender Verbindungen beruhen, aus denen bei der Entwicklung diffundierende Farbstoffe oder Farbstoffvorläuferprodukte bildmäßig abgespalten und auf eine Bildempfangsschicht übertragen werden. Derartige nicht diffundierende farbegebende Verbindungen sind beispielsweise in den folgenden Druckschriften beschrieben:

US 3 227 550, US 3 443 939, US 3 443 940, DE—OS 1 930 215, DE—OS 2 242 762, DE—OS 2 402 900, DE—OS 2 406 664, DE—OS 2 505 248, DE—OS 2 543 902, DE—OS 2 613 005, DE—OS 2 645 656, DE—OS 2 809 716, BE 861 241.

In den genannten Druckschriften werden sowohl solche nicht diffundierende farbgebende Verbindungen beschrieben, die bei Verwendung üblicher negativer Silberhalogenidemulsionen negative Farbbilder erzeugen, als auch solche, die bei Verwendung negativer Silberhalogenidemulsionen positive Farbbilder erzeugen. Im ersteren Fall bedarf es, falls positive Farbbilder erwünscht sind, entweder der Verwendung direkt positiver Silberhalogenidemulsionen oder, bei Verwendung von negativen Emulsionen, der Anwendung eines der bekannten Umkehrverfahren, z.B. nach dem Silbersalzdiffusionsverfahren (US 2 763 800) oder durch Verwendung von Verbindungen, die als Folge der Entwicklung Entwicklungsinhibitoren in Freiheit setzen.

Bei Verwendung von Bildempfangsschichten, die die erfindungsgemäß mit mehrwertigen Metallkationen beladenen Mischpolymerisatdispersionen enthalten, werden bevorzugt farbgebende Verbindungen verwendet, die im Farbstoffrest zur Komplexbildung befähigte Substituenten enthalten. Hierunter sind besonders zu erwähnen Azofarbstoffe, die benachbart zur Azobindung chelatbildende Substituenten wie —OH, —NHR oder auch Ringstickstoffatome aufweisen. Farbgebende Verbindungen mit solchen Farbstoffresten sind beispielsweise beschrieben in den Research Disclosure Publikationen Nr. 17334 (Sept. 1978) und Nr. 18022 (April 1979).

Beispiel 1

In dem folgenden Beispiel wird die Herstellung und die Verwendungsmöglichkeit der Dispersion erläutert.

*Ausgangslatex A*

I.

Unter Stickstoff wurden 23 g einer 45%igen wäßrigen Lösung von Natriumdodecyldiphenyletherdisulfonat zu 3400 g entionisiertem Wasser gegeben. Bei 75°C wurden dann unter kräftigem Rühren 200 g eines Monomerengemisches aus 1245 g Methylacrylat und 100 g frisch destilliertem Trivinylcyclohexan zugefügt. Nach 10 Minuten wurden dazu 88 g einer Lösung aus 8,25 g Kaliumperoxodisulfat in 260 g Wasser (Initiatorlösung) und anschließend bei 80 bis 83°C gleichzeitig der Rest der Initiatorlösung hinzugegeben. Nach 30 Minuten wurde die Mischung mit einer Lösung von 88 mg tert.-Butylhydroperoxid und 440 mg Natriumdodecyldiphenyletherdisulfonat in 4,5 g destilliertem Wasser sowie mit einer Lösung von 800 mg Ascorbinsäure in 87 g destilliertem Wasser versetzt und weitere 2 Stunden bei 80 bis 83°C gerührt. Geringe Mengen an ausgefallenem Polymerisat wurden abfiltriert.

II.

Zu 2560 g des nach I. hergestellten Latex wurden 101 g Kaliumhydroxid in 4000 g destilliertem Wasser und nach 7-stündigem Rühren weitere 223 g Kaliumhydroxid in 875 ml Wasser zugegeben, worauf die Mischung weitere 20 Stunden bei Siedetemperatur gerührt wurde bis der pH bei 10 lag. In dem so erhaltenen Latex lagen die Acrylat-Einheiten in Form des Kaliumsalzes vor.

Der Latex wurde dialyiert und auf einen Feststoffgehalt von 14 Gew.-% eingestellt.

*Ausgangslatex B*

Es wird wie unter A verfahren, wobei jedoch anstelle des unter A angegebenen Monomerengemisches eine Mischung aus 1200 g Methylacrylat, 50 g Divinylbenzol, 100 g Butylacrylat verwendet wird.

*Ausgangslatex C*

Es wird wie unter A verfahren, wobei jedoch anstelle des unter A angegebenen Monomergemisches eine Mischung aus 1100 g Methylacrylat, 75 g Trivinylcyclohexan und 175 g Carboxyethylacrylat verwendet wird.

*Vergleichslatex*

Um die Stabilität der erfindungsgemäßen Latices aufzuzeigen, wurde Polymer X aus Beispiel 10 der DE—OS 2 841 875 als Vergleichssubstanz hergestellt.

*Mt-Latex 1—24* (Metallionen enthaltende Latices)

500 g Ausgangslatex mit einem Feststoffgehalt von 14 Gew.-% werden innerhalb von 30 Minuten mit 250 ml einer Metallsalzlösung verrührt. Art und Menge des Salzes sind aus der folgenden Tabelle 1 ersichtlich. Anschließend wird der Metallionen enthaltende Latex 48 Stunden dialysiert.

TABELLE 1

| Mt-Latex | Ausgangslatex | Metallsalz | Menge in [g] | Stabilität/ Koagulation nach 7 Tagen? |
|---|---|---|---|---|
| 1 | Latex A | Aluminiumnitrat . 9 $H_2O$ | 4,36 | kein Koagulat |
| 2 | " | Kupfer-II-chlorid . 2 $H_2O$ | 10,4 | " |
| 3 | " | Kobalt-II-nitrat . 6 $H_2O$ | 20 | " |
| 4 | " | Bleinitrat | 19,3 | " |
| 5 | " | Zinkchlorid | 6,4 | " |
| 6 | " | Eisen-II-chlorid . 4 $H_2O$ | 12,3 | " |
| 7 | " | Eisen-III-chlorid . 6 $H_2O$ | 19,4 | " |
| 8 | " | Kupfer-II-nitrat . 3 $H_2O$ | 5,5 | " |
| 9 | " | Nickelsulfat . 7 $H_2O$ | 40 | " |
| 10 | " | Cadmiumnitrat . 4 $H_2O$ | 16,5 | " |
| 11 | " | Magnesiumchlorid . 6 $H_2O$ | 18,2 | " |
| 12 | " | Platin-IV-chlorid . 5 $H_2O$ | 15,4 | " |
| 13 | " | Rhodiumnitrat . 2 $H_2O$ | 7,9 | " |
| 14 | " | Iridiumtetrachlorid | 9,4 | " |
| 15 | " | Silbernitrat | 10,4 | " |
| 16 | " | Gold-III-chlorid | 15,3 | " |
| 17 | Latex B | Chromo-III-chlorid . 6 $H_2O$ | 16,3 | kein Koagulat |
| 18 | " | Nickelsulfat . 7 $H_2O$ | 36,5 | " |
| 19 | " | Zinkchlorid | 5,2 | " |
| 20 | " | Kobalt-II-nitrat . 6 $H_2O$ | 18,1 | " |
| 21 | Latex C | Kupfer-II-chlorid . 2 $H_2O$ | 11,1 | " |
| 22 | " | Eisen-II-chlorid . 4 $H_2O$ | 13,1 | " |
| 23 | " | Magnesiumchlorid . 6 $H_2O$ | 21,2 | " |
| 24 | " | Gold-III-chlorid | 10,7 | " |
| Vgl.-Latex 1 | OS 2 841 875 Polymer X | Nickelsulfat . 7 $H_2O$ | 36,5 | vollständig koaguliert |
| " 2 | " | Chrom-II-chlorid . 6 $H_2O$ | 16,3 | " |

Beispiel 2

I.

Zu 10 g einer 10%igen Gelatinelösung wird 1 g Mt-Latex 7 gegeben. Die Lösung wird auf Glasplatten angegossen und trocknet zu transparenten Filmen auf.

II.

Zu 10 g einer 10%igen Gelatinelösung gibt man 1,0 g 4%ige Chrom-III-chlorid-Lösung. Diese Lösung wird auf Glasplatten angegossen und aufgetrocknet.

Die unter I. und II. erhaltenen Filme werden in siedendes Wasser gelegt.

Schicht I löst sich auf;

Schicht II quillt leicht an und ist gegen siedendes Wasser beständig.

Der Versuch zeigt, daß die erfindungsgemäßen Dispersionen die Mt-Ionen fest gebunden enthalten. Bei nur schwach an den Latex gebundenen Mt-Ionen ist ein Herausdiffundieren der Mt-Ionen von dem Latex in die Gelatineschicht zu erwarten, was — wie Schicht II zeigt — zu einer Vernetzung führen würde.

Beispiel 3

In diesem Beispiel wird der Einsatz der erfindungsgemäßen mehrwertige Metallkationen enthaltenden Mischpolymerisatdispersionen in Bildempfangsschichten für das Farbdiffusionsübertragungsverfahren beschrieben.

Ein Bildempfangsmaterial A wurde hergestellt, indem auf einen transparenten Schichtträger aus Polyethylenterephthalat nacheinander die folgenden Schichten aufgetragen wurden (die angegebenen Mengen beziehen sich auf 1 $m^2$).

1. Eine Bildempfangsschicht aus 2,7 g Mt-Latex 9 und 2,7 g Gelatine.
2. Eine weiße Pigmentschicht aus 24 g $TiO_2$ und 2,4 g Gelatine.
3. Eine schwarze Pigmentschicht aus 1,9 g Ruß und 2,0 g Gelatine.

Als Vergleich wurde ein Bildempfangsmaterial B hergestellt, das sich von dem Material A nur dadurch unterschied, daß es anstelle des Mt-Latex 9 die gleiche Menge eines Copolymeren aus Styrol, N-Vinylbenzyl-N,N,N-trimethylammoniumchlorid und 1,4-Divinylbenzol enthielt.

Die beiden Bildempfangsmaterialien A und B wurden mit den nachstehend angegebenen Farbstoffen, die mit $Ni^{2\oplus}$-Ionen farbige Metallkomplexe bilden, angefärbt, indem Streifen der Materialien solange in wäßrige Lösungen der Farbstoffe 0,3 mMol/100 ml; pH 13) getaucht wurden, bis die auf der Seite des transparenten Trägers auftretende Anfärbung eine Dichte von 1,3 erreicht hatte. In der $Ni^{2\oplus}$-freien Schicht B erschienen die Farbstoffe in ihrer ursprünglichen Farbe, während in der Schicht A mit der erfindungsgemäßen Mischpolymerisatdispersion durch die Komplexierung eine Farbtonverschiebung auftrat und der gewünschte Farbton des komplexierten Farbstoffes erhalten wurde. In dem Vergleichsmaterial B wurde hierzu eine Nachbehandlung mit einer 3%igen Nickelacetatlösung erforderlich.

Die mit den Materialien A und B sowie den Farbstoffen 1, 2 und 3 erhaltenen Ergebnisse sind der folgenden Tabelle 2 zu entnehmen.

TABELLE 2

| | max | | | Lichtechtheit Restdichte nach $7.2 \cdot 10^{6}$1 x.h | | |
|---|---|---|---|---|---|---|
| Farbstoff | A | B | B/Ni–ac | A | B | B/Ni–ac |
| 1 | 650 | 610 | 650 | 70 % | 0 % | 44 % |
| 2 | 530/570 | 505 | 530/575 | 93,7 % | 23 % | 66 % |
| 3 | 530 | 500 | 530/575 | 96 % | 26 % | 86 % |

''Ni–ac'' in der 4. und 7. Spalte bedeutet:

Nachbehandelt mit Nickelacetat

FARBSTOFF 1

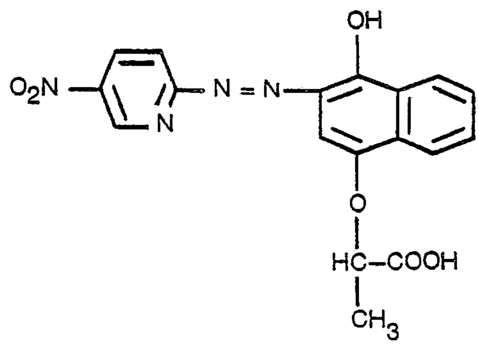

FARBSTOFF 2

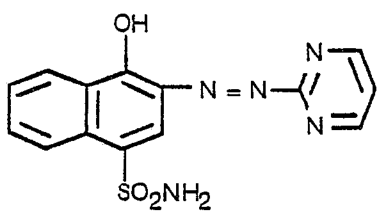

FARBSTOFF 3

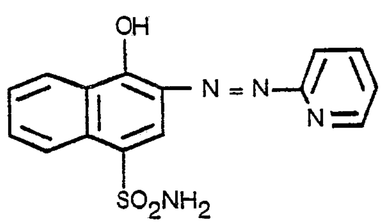

**Patentansprüche**

1. Dispersion von Teilchen einer durchschnittlichen Teilchengröße von weniger als 1 µm eines vernetzten mehrwertige Metallionen enthaltenden anionischen Mischpolymerisates der folgenden Formel

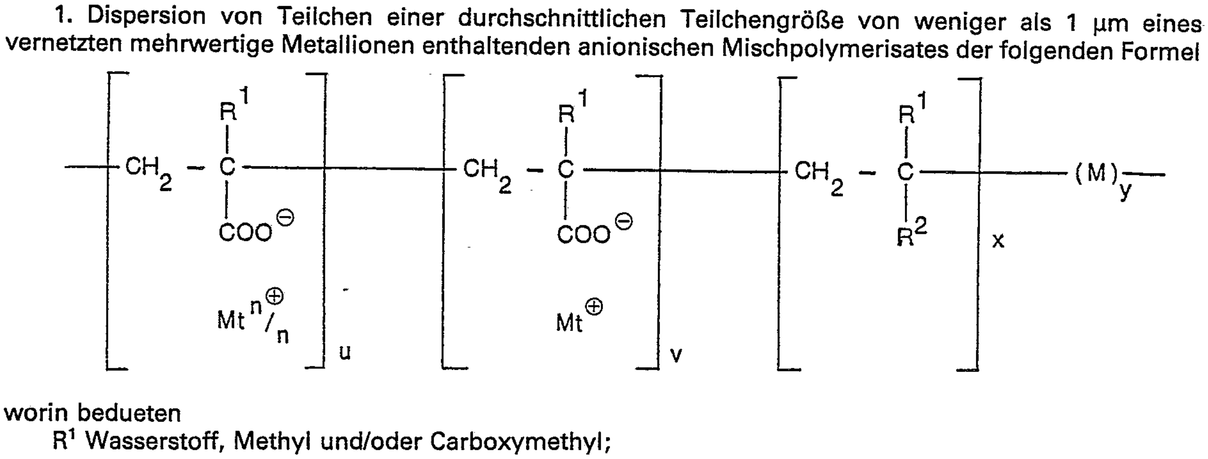

worin bedueten

$R^1$ Wasserstoff, Methyl und/oder Carboxymethyl;

$R^2$ den vervollständigenden Rest einer organischen Vernetzerverbindung mit mindestens zwei copolymerisierbaren C-C-Doppelbindungen, deren eine

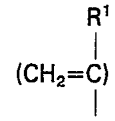

in die in der Formel dargestellte Polymerkette einpolymerisiert worden ist;

M polymerisierte Einheiten einer weiteren mit Acryl- oder Methacrylsäure oder mit deren Estern copolymerisierbaren monoethylenisch ungesättigten Verbindung;

$Mt^{n\oplus}$ ein n-wertiges Metallkation mit $n \geqq 2$;

$Mt^{\oplus}$ ein Alkalimetallkation oder ein Ammoniumkation;

u, v, x, y die molaren Anteile der in dem Mischpolymerisat enthaltenen polymerisierten Monomeren in Mol-% und zwar im einzelnen:

u 20—99 Mol-%, vorzugsweise 40—98 Mol-%;

x 0,5—10 Mol-%, vorzugsweise 1—5 Mol-%;

v+y 0—79,5 Mol-%, vorzugsweise 0—55 Mol-%.

2. Verwendung von mehrwertige Metallkationen enthaltenden anionischen Mischpolymerisatdispersionen gemäß Anspruch 1 zur Herstellung eines Indikatorblattes.

3. Verwendung von mehrwertige Metallkationen enthaltenden anionischen Mischpolymerisatdispersionen gemäß Anspruch 1 zur Herstellung von Bildempfangsschichten für das Farbdiffusionsübertragungsverfahren.

4. Fotografisches Material mit einer durch saure Farbstoffe anfärbbaren oder angefärbten mehrwertige Metallkationen enthaltenden Schicht, dadurch gekennzeichnet, daß die anfärbbare oder angefärbte Schicht eine mehrwertige Metallkationen enthaltende anionische Mischpolymerisatdispersion gemäß Anspruch 1 enthält.

**Revendications**

1. Dispersion de particules d'un diamètre moyen inférieur à 1 µm d'un copolymère anionique réticulé contenant des ions métalliques polyvalents, de formule suivante

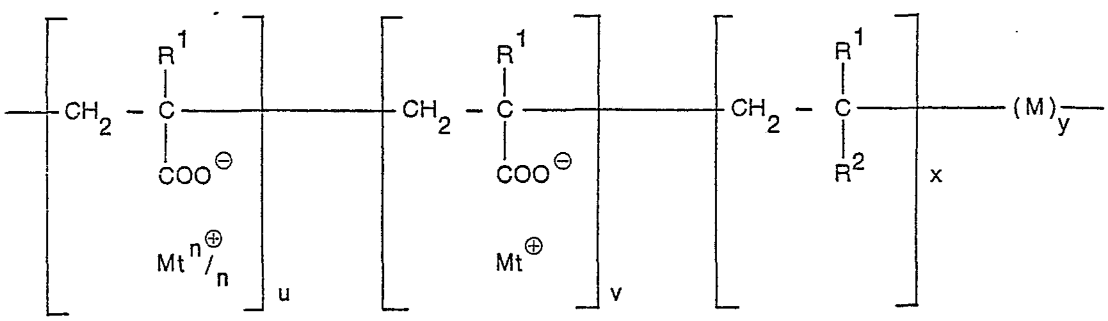

dans laquelle

$R^1$ désigne l'hydrogène, le groupe méthyle et/ou le groupe carboxyméthyle;

$R^2$ est le reste complémentaire d'un composé organique de réticulation ayant au moins deux doubles liaisons carbone-à-carbone copolymérisables, dont l'une

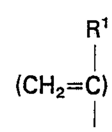

a été incorporée par polymérisation à la chaîne polymérique représentée dans la formule;

M désigne des motifs polymérisés d'un autre composé à insaturation monoéthylénique copolymérisable avec l'acide acrylique ou avec l'acide méthacrylique ou avec leurs esters;

$Mt^{n\oplus}$ est un cation métallique n-valent avec $n \geqslant 2$;

$Mt^{\oplus}$ est un cation de métal alcalin ou un cation ammonium;

u, v, x, y sont les fractions molaires des monomères polymérisés contenus dans le copolymère en moles %, à savoir en particulier;

u représente 20—99 moles %, de préférence 40—98 moles %;

x représente 0,5—10 moles %, de préférence 1—5 moles %;

v+y représente 0—79,5 moles %, de préférence 0—55 moles %.

2. Utilisation de dispersions de copolymères anioniques renfermant des cations métalliques polyvalents conformément à la revendication 1 pour la production d'une feuille servant d'indicateur.

3. Utilisation de dispersions de copolymères anioniques contenant des cations métalliques polyvalents suivant la revendication 1 pour la production de couches de réception d'image pour le procédé de transfert par diffusion de couleur.

4. Support photographique à couche contenant des cations métalliques polyvalents colorée ou colorable par des colorants acides, caractérisé en ce que la couche colorée ou colorable contient une dispersion de copolymère anionique renfermant des cations métalliques polyvalents suivant la revendication 1.

**Claims**

1. Dispersion of particles of an average particle size of less than 1 µm of a cross-linked anionic copolymer containing polyvalent metal ions and having the following formula

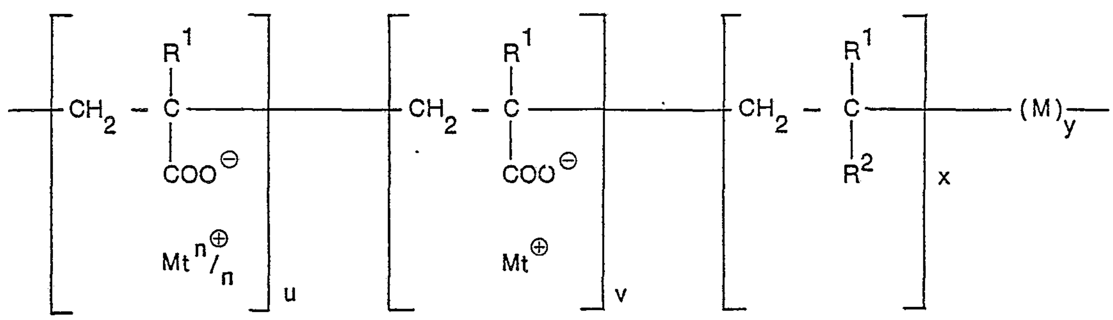

wherein

$R^1$ denotes hydrogen, methyl and/or carboxymethyl;

$R^2$ denotes the completing radical of an organic crosslinking compound containing at least two copolymerisable C—C double bonds of which one

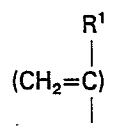

has been copolymerised into the polymer chain shown in the formula;

M denotes polymerised units of a further monoethylenically unsaturated compound which can be copolymerised with acrylic acid or methacrylic acid or with esters thereof;

$Mt^{n\oplus}$ denotes an n-valent metal cation in which $n \geqq 2$;

$Mt^{\oplus}$ denotes an alkali metal cation or an ammonium cation;

u, v, x and y denote the molar proportions, in mol%, of the polymerised monomers contained in the copolymer, and in particular:

u denotes 20—99 mol%, preferably 40—98 mol%;

x denotes 0.5—10 mol%, preferably 1—5 mol%; and

v+y denotes 0—79.5 mol%, preferably 0—55 mol%.

2. Use of anionic copolymer dispersions containing polyvalent metal cations, according to Claim 1, for the preparation of an indicator sheet.

3. Use of anionic copolymer dispersions containing polyvalent metal cations, according to Claim 1, for the preparation of image receiving layers for the dye diffusion transfer process.

4. Photographic material comprising a layer containing polyvalent metal cations which can be coloured or has been coloured by means of acid dyes, characterised in that the layer which can be coloured or has been coloured contains an anionic copolymer dispersion containing polyvalent metal cations, according to Claim 1.